# FASCICULE DE BREVET EUROPEEN

(11) **EP 0 524 869 B1**
(45) Date de publication et mention de la délivrance du brevet: **11.01.1995**
(21) Numéro de dépôt: 92402093.6
(22) Date de dépôt: 21.07.1992
(51) Int. Cl.: G11B 23/037

(54) **Bobine pour bande magnétique d'ordinateur ou autres supports souples**
Spule für Computermagnetband oder sonstige flexible Träger
Reel for computer magnetic tape or other flexible carriers

(30) Priorité: 23.07.1991 FR 9109305
(43) Date de publication de la demande: 27.01.1993
(73) Titulaire: REXTON, Inc., Kerrville, Texas 78028 (US)
(72) Inventeur: Posso, Patrick, CH-1009 Pully (CH)
(74) Mandataire: Caunet, Jean

(56) Documents cités:
- DE-A- 2 259 699
- FR-A- 2 147 473
- FR-A- 2 456 989

## Description

La présente invention concerne une bobine pour bande magnétique d'ordinateur ou autre support souple.

Une bobine de ce type est décrite dans le brevet français FR-A-2 147 473. Elle ne comporte que deux pièces en matière plastique moulée : l'une opaque qui est destinée à supporter seule la bande lors de son enroulement et de son déroulement à grande vitesse et l'autre, transparente qui est destinée à être fixée de façon très souple dans la première.

La pièce opaque est conçue et réalisée pour être très résistante. D'abord, la matière plastique qui la constitue est chargée de fibres de verre. Ensuite, sa structure monolithique particulière est en principe indéformable ; en effet, cette pièce opaque comporte un flasque faisant corps avec un manchon d'enroulement et un moyeu d'entraînement par l'intermédiaire d'une partie massique. Dans cette partie, sont menagés des logements dans lesquels pénètrent des doigts faisant corps avec le flasque transparent. La partie massique comporte alors des éléments très épais constitués par deux couronnes reliant un manchon intermédiaire, respectivement au manchon d'enroulement et au moyeu d'entraînement. Cette partie massique est très rigide et sa rigidité est accrue par des nervures subsistant entre les logements précités et reliant notamment les deux manchons entre eux.

En conséquence, la pièce opaque est très rigide et devrait être apte à supporter les efforts qui la sollicitent sans déformation du manchon d'enroulement et sans transmission même partielle de ces efforts au moyeu d'entraînement qui dès lors ne devrait pas se déformer.

En réalité, le manchon d'enroulement se déforme légèrement lorsque la bande magnétique est enroulée et il en résulte que la galette de bande magnétique n'est pas géométriquement parfaite en ce sens que ses flancs ne sont pas rigoureusement plans et que la bande flotte latéralement d'une faible mesure lors de son défilement ce qui perturbe la qualité de l'enregistrement et de la restitution des signaux. Il en résulte par ailleurs que la contraction dissymétrique du manchon d'enroulement s'accompagne d'un resserrement du moyeu d'entraînement sur le tourillon menant, rendant le démontage de la bobine, non pas doux et facile, mais difficile en raison du coincement.

Ces défauts apparaissent bien que la déformation du manchon d'enroulement soit en réalité très faible.

Pour les éviter, la démarche a toujours été la même : rigidifier et renforcer la résistance de la partie centrale de la bobine. Ainsi, des bobines trois pièces en matière plastique font application d'une structure caisson dans laquelle les deux pièces latérales coopèrent avec une pièce intermédiaire.

Cette structure devrait en principe donner satisfaction mais en pratique présente le même défaut, même s'il est atténué.

Dans la bobine deux pièces, le flasque transparent comporte, d'une part, des doigts saillants pénétrant dans les logements de la pièce travaillante opaque et d'autre part, un manchon tubulaire central de faible hauteur emboîté autour du moyeu d'entraînement. Des espaces libres sont prévus entre les doigts transparents et les manchons opaques ainsi qu'entre le manchon central transparent et le moyeu d'entraînement. L'assemblage des deux pièces est obtenu en déposant avant assemblage une colle restant souple à l'usage qui remplace lesdits espaces ; dès lors, la pièce transparente ne participe pas à la résistance de la pièce opaque.

Par contre, dans la bobine trois pièces, l'assemblage est réalisé par soudage ultrasonique. L'expérience a montré que l'exécution de ce soudage est extrêmement difficile car elle est liée au contrôle du jeu entre les pièces à relier, jeu qu'il est difficile de maîtriser en raison du grand nombre de moules identiques qu'il est nécessaire de mettre en oeuvre pour fabriquer en grandes séries les bobines. Il est d'ailleurs pratiquement impossible de rendre compatible l'un quelconque des moules de fabrication d'une pièce avec l'un quelconque des moules de fabrication de la deuxième pièce et avec l'un quelconque des moules de fabrication de la troisième pièce sans devoir effectuer des ajustements fréquents ni devoir utiliser des outils d'assemblage spécifiques.

Dans ces conditions, ou bien le jeu est trop important et le positionnement relatif des pièces de la bobine est défectueux, ou bien le jeu est insuffisant et la qualité géométrique de la portée de bande est doûteuse, la pièce transparente ne pouvant pas vibrer librement.

Le document FR-A-2 456 989 présente une telle bobine trois pièces, dont le noyau est renforcé par une couronne constituée par un tube en alliage léger, et où l'assemblage des deux pièces restantes est réalisé par soudage ultrasonique.

Un voile d'entretoisement est prévu entre le moyeu et le manchon d'enroulement. Des moyens de renforcement sont intégrés à la structure en vue d'assurer la résistance et la rigidité du noyau.

La présente invention a pour but de concevoir et de réaliser une bobine deux pièces de façon que toutes les difficultés de moulage et d'assemblage soient reportées sur la pièce opaque et que la résistance de la bobine soit assurée essentiellement par la pièce opaque sans pratiquement la participation de la pièce transparente.

Dans cette perspective, la présente invention adopte une démarche contraire à l'enseignement de l'art antérieur : elle renonce à constituer une structure caisson entre le manchon d'enroulement et le moyeu d'entraînement, avec ou sans la pièce transparente. Malgré cela, l'invention vise à améliorer la qualité de la portée de bande de la bobine deux pièces et à empêcher que le moyeu d'entraînement se contracte à l'usage, en assurant sur la pièce travaillante, entre le manchon d'enroulement et le moyeu d'entraînement, une liaison souple grâce à laquelle le manchon peut se contracter mais en conservant sa cylindricité, alors que le moyeu ne doit absolument pas se déformer et en assurant concomitamment sur la pièce transparente, entre ses éléments saillants internes, une liaison également souple grâce à laquelle le mode de déformation précité de la pièce travaillante n'est pas perturbé mais au contraire corrigé ; il ne s'agit pas d'une participation à la résistance mais d'une correction au second degré d'une éventuelle déformation latérale de la liaison souple de la pièce opaque. Le but précité est également atteint en reliant le moyeu d'entraînement au reste de la bobine par des moyens assimilables à une semi-articulation médiane et en mettant en place entre les deux pièces deux cordons de soudure ultrasonique dans des conditions telles que la cylindricité de la portée de bande n'est pas affectée et que la géométrie de la bobine dans son ensemble n'est pas perturbée.

Par ailleurs, l'invention vise à ce que la planéité du flasque de la pièce opaque soit parfaitement assurée et stabilisée à l'usage en ce sens que le moulage de la partie centrale de ladite pièce opaque et l'enroulement de la bande magnétique ne doivent pas influencer, ni perturber la planéité dudit flasque.

Dans ce but et conformément à l'invention, la bobine ne comprend, de façon connue, que deux pièces en matière plastique moulée dont l'une opaque est travaillante et dont l'autre transparente est pratiquement inerte, la pièce travaillante comportant un flasque faisant corps avec un manchon d'enroulement et avec un moyeu d'entraînement, tandis que la pièce transparente comporte un flasque faisant corps avec au moins une partie interne saillante destinée à être reliée définitivement avec au moins une partie conjuguée de la pièce travaillante par des moyens de solidarisation.

L'invention réside alors :
- en ce que le manchon d'enroulement et le moyeu d'entraînement de la pièce travaillante en matière plastique non chargée sont en eux-mêmes rigides et indéformables et s'étendent en porte-à-faux, en étant séparés l'un de l'autre par un espace libre et en étant exempt de tout soutien intérieur et extérieur respectivement du flasque transparent, tandis qu'une partie annulaire, compressible sur elle-même, comprenant un manchon intermédiaire relié, d'une part, au manchon d'enroulement par une couronne prolongeant le flasque et d'autre part, au moyen d'entrainement par une couronne aboutissant sensiblement dans la zone médiane du moyeu constitue un élément relativement souple exempt de nervurage qui évite la transmission au moyeu de la faible contraction du manchon dûe à la tension d'enroulement de la bande et qui cependant assure une tenue de la pièce travaillante suffisante pour que l'axe dudit manchon soit toujours sensiblement parallèle à l'axe du moyeu,
- en ce qu'une partie annulaire de la pièce transparente prolongeant son flasque vers le centre du moyeu présente un manchon tubulaire s'étendant à l'extérieur du moyeu et constitue un élément relativement souple coopérant avec celui de la pièce travaillante pour corriger de façon subsidiaire la déformation principale dudit élément souple de ladite pièce travaillante,
- en ce que les éléments relativement souples de la pièce travaillante et de la pièce transparente aboutissent sensiblement dans la zone médiane du moyeu,
- et en ce qu'au moins deux cordons de soudure relient des parties annulaires conjuguées de contact desdites pièces.

Avantageusement, chaque moyen de solidarisation est un cordon de soudure ultrasonique ayant une interface de cisaillement délimitée par deux portées dont une au moins est conique relativement à l'axe de la bobine pour assurer un précentrage permanent des pièces en regard de la sonotrode correspondante, précentrage qui autorise un jeu radial fonctionnel d'assemblage desdites deux pièces supérieur au jeu nécessaire et suffisant pour que la pièce excitée par ultrasons puisse vibrer librement contre l'autre demeurée inerte, afin que la géométrie de la bobine ne soit pas perturbée par la soudure.

Une gorge est ménagée dans le flasque de la pièce travaillante autour du manchon d'enroulement pour que le moulage de ce flasque et celui de ce manchon ainsi que de la partie annulaire, bien qu'exécutés concomitamment dans le même moule, ne se perturbent pas mutuellement.

Suivant une forme de réalisation particulièrement avantageuse, le flasque de la pièce travaillante fait corps avec le manchon d'enroulement et avec un manchon intérieur de doublage reliés entre eux par des nervures ; des cordons de soudure ultrasonique procédant par cisaillement assurent la liaison rigide d'une part, de l'extrémité libre du manchon intérieur avec un bourrelet annulaire intérieur du flasque transparent et, d'autre part, de l'extrémité libre d'un manchon tubulaire de la pièce transparente sensiblement perpendiculaire au flasque de celle-ci avec le moyeu d'entraînement près de la partie annulaire de la pièce travaillante.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :
- la figure 1 est une élévation d'une bobine deux pièces conforme à l'invention ;
- la figure 2 est une demi-coupe partielle illustrant, à plus grande échelle, une première forme de réalisation de la bobine ;
- les figures 2A et 2B des vues agrandies représentant deux modes d'exécution du détail désigné par la flèche F sur la figure 2,
- les figures 3 à 5 sont des vues analogues à la figure 2, montrant d'autres formes de réalisation.

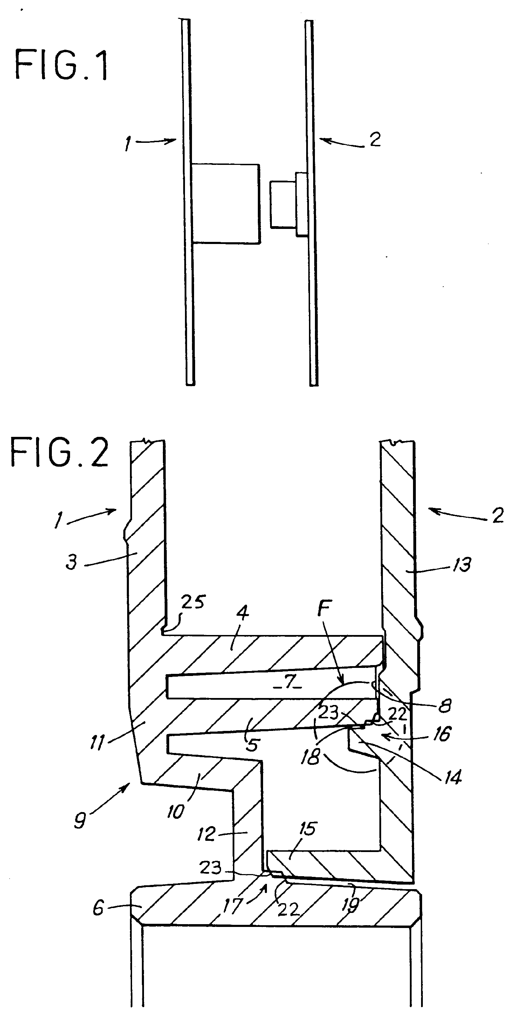

Ainsi que cela ressort de la figure 1, la bobine comporte une pièce opaque 1 très résistante en matière plastique telle que du polystyrène par exemple. Cette matière plastique n'est pas chargée en particulier de fibres de verre ; cela constitue un avantage, étant donné que, l'expérience l'ayant montrée, des particules de fibres de verre peuvent à l'usage se détacher de la bobine et constituer une micropollution qui est à l'origine des pertes d'informations que la bande magnétique contient et qui génère un handicap au développement de la densité d'information.

La bobine comporte également une pièce transparente 2 en matière plastique "cristal".

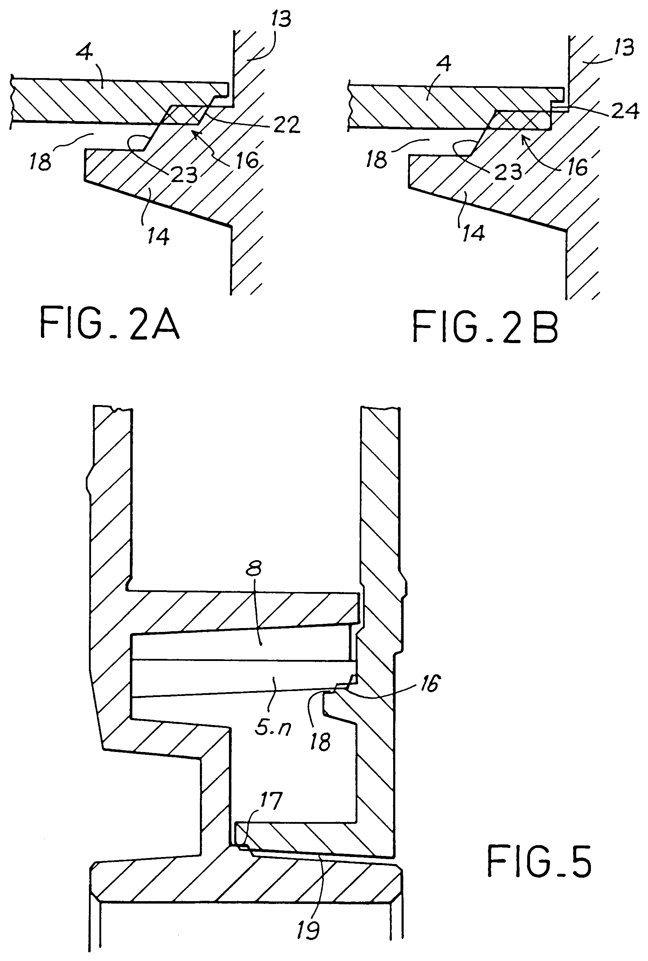

Suivant une première forme de réalisation illustrée par la figure 2, la pièce 1 comporte un flasque 3 faisant corps avec un manchon périphérique 4 pour l'enroulement de la bande magnétique, un manchon de doublage intérieur 5 et un moyeu d'entraînement 6. Les manchons 4 et 5 sont séparés l'un de l'autre par un espace libre 7 et reliés entre eux par des nervures 8.

Le flasque 3 fait corps avec le moyeu 6 par l'intermédiaire d'une partie annulaire 9 comprenant un manchon intermédiaire 10 relié, d'une part, au manchon d'enroulement 4 par une couronne 11 prolongeant le flasque 3, et d'autre part, au moyeu d'entraînement 6 par une couronne 12. La couronne 12 aboutit sensiblement dans la zone médiane du moyeu. La partie annulaire 9 est profilée, en coopération avec le manchon 4 et le moyeu 6, sensiblement en S et compressible sur elle-même lors de la contraction du manchon d'enroulement 4, ce qui évite que le moyeu 6 se contracte également. La compression de la partie 9 s'effectue dans une direction sensiblement parallèle au plan du flasque 3, de sorte que le moyeu étant cylindrique, le manchon le reste aussi pendant ladite compression. Ensuite, la semi-articulation médiane de la partie 9 sur le moyeu 6 permet de conserver au flasque 3, dès lors que le manchon 4 reste cylindrique, sa planéité et sa perpendicularité à l'axe du moyeu. Bien entendu, il est souhaitable d'éviter le déversement latéral de la partie 9 afin que la condition précitée de cylindricité soit respectée et pour cela, la pièce transparente 2 intervient subsidiairement.

Cette pièce 2 comporte un flasque 13 présentant en saillie interne un bourrelet annulaire 14 et un manchon tubulaire 15.

Dans la première forme de réalisation selon la figure 2, le bourrelet 14 est situé sous le manchon de doublage intérieur 5 de la pièce 1 et y est fixé par un cordon annulaire 16 de soudure ultrasonique procédant par cisaillement. Le manchon 15 s'étend à l'extérieur du moyeu 6 de la pièce 1 et est fixé dans l'angle de ce moyeu et de la couronne 12 par un cordon annulaire 17 de soudure ultrasonique procédant par cisaillement.

Il est important de rappeler que le soudage ultrasonique est exécuté en pressant la pièce opaque 1 contre la pièce transparente 2 et en appliquant sur celle-ci en regard de chaque zone à souder une sonotrode générant des ultrasons. Pour que les ultrasons puissent mettre en vibration la pièce excitée 2 et la chauffer intensément par transduction afin qu'elle fonde avec la pièce fixe 1 dans la zone de contact, il est nécessaire qu'un jeu suffisant soit ménagé entre lesdites pièces. Il est souhaitable que le jeu fonctionnel 18, 19 s'assemblage de celles-ci soit supérieur au jeu nécessaire et suffisant pour souder par ultrasons car en effet un tel jeu fonctionnel est très difficile à maîtriser dans les conditions habituelles de moulage en grandes séries avec de nombreux moules pour chaque pièce. Dès lors que le jeu fonctionnel ne peut être obtenu sans difficulté qu'avec une fourchette de tolérances relativement grande, il est essentiel que la soudure ultrasonique puisse être exécutée dans d'excellentes conditions sans perturber la géométrie de la bobine. Des modes particuliers d'exécution de la surface de cisaillement sont mises en oeuvre.

Suivant un premier mode d'exécution illustré par la figure 2A, l'interface de cisaillement de chaque soudure, 16 par exemple, est délimitée par deux portées coniques 22 et 23 formées concentriquement à l'axe de la bobine en bout du manchon d'enroulement 4 de la pièce opaque 1 et respectivement, au pied du bourrelet 14 de la pièce transparente. Ces portées permettent d'obtenir un précentrage permanent des pièces en regard de la sonotrode et ainsi, d'annihiler l'effet perturbateur que pourrait avoir le jeu fonctionnel d'assemblage qui est supérieur au jeu nécessaire à la vibration de la pièce transparente.

Suivant un deuxième mode d'exécution illustré par la figure 2B, la portée conique 23 du bourrelet 14 coopère avec une portée droite 24 perpendiculaire à l'axe de la bobine. L'effet de précentrage est également observé dans ce cas.

Il est également important de remarquer que le flasque 13 et le manchon 15 forment une liaison relativement souple pouvant se déformer pour corriger éventuellement les défauts de contraction de la partie en S 9 de la pièce opaque travaillante 1.

Le manchon opaque 5 bute contre le flasque transparent 13, tandis que le manchon 4 en est faiblement écarté pour assurer un bon positionnement des premières spires de la galette de bande magnétique. A l'angle du flasque 3 et du manchon 4, une gorge 25 est réalisée pour constituer une réserve d'acier dans l'outil préservant ainsi l'angle de microdéfauts géométriques. Le moulage de la pièce 1 peut alors être exécuté dans des conditions telles que la planéité du flasque et la cylindricité du manchon d'enroulement peuvent être obtenus sans interférences perturbantes de leurs phases respectives de moulage l'une sur l'autre.

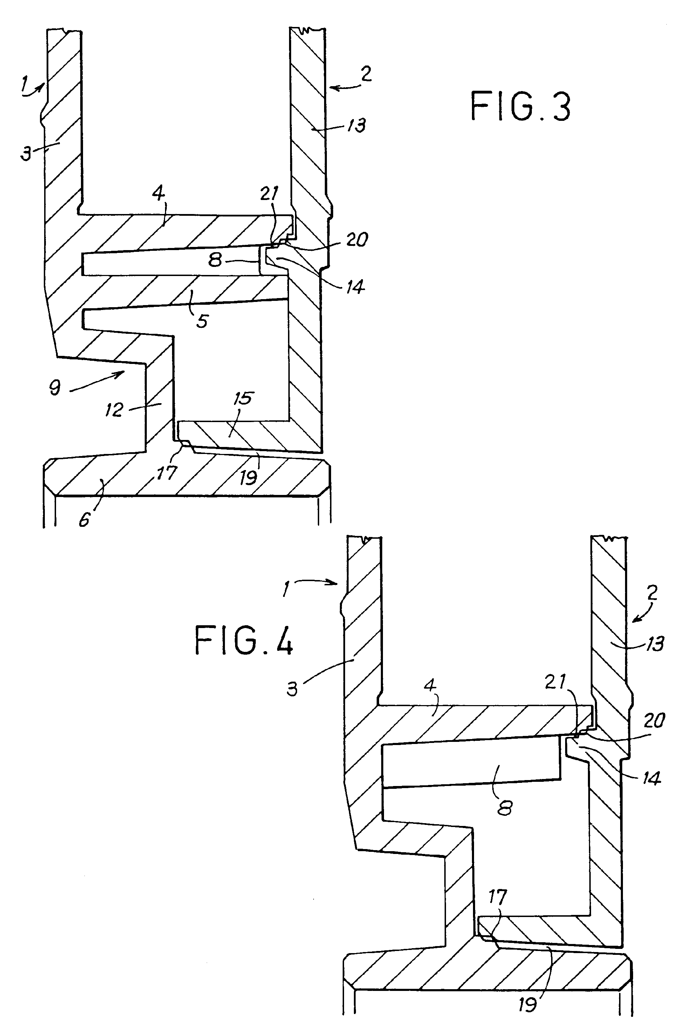

La deuxième forme de réalisation illustrée par la figure 3 diffère de la première selon la figure 2 par le fait que le bourrelet 14 est interposé entre les manchons 4 et 5, les nervures 8 étant moins longues, et par le fait qu'un cordon de soudure ultrasonique 20 relie ledit bourrelet au manchon 4, entre lesquels un jeu 21 semblable aux précédents 18 et 19 est ménagé.

La troisième forme de réalisation illustrée par la figure 4 diffère de la deuxième par le fait que le manchon de doublage 5 est supprimé et que les nervures 8 sont plus étendues radialement.

La quatrième forme de réalisation illustrée par la figure 5 est semblable à la première (figure 2) à la différence près que le manchon 5 est remplacé par une pluralité de tronçons 5.n faisant corps avec les nervures 8 et séparés les uns des autres par des fentes, le cordon de soudure 16 étant interrompu au niveau desdites fentes.

Bien entendu, les soudures ultrasoniques peuvent être remplacées par des soudures par finition rotative.

## Revendications

1. Bobine pour bande magnétique d'ordinateur ou autres supports souples, constituée par seulement deux pièces en matière plastique moulée dont l'une opaque (1) est travaillante et dont l'autre transparente (2) est pratiquement inerte, la pièce travaillante (1) comportant un flasque (3) faisant corps avec un manchon d'enroulement (4) et avec un moyeu d'entraînement (6) tandis que la pièce transparente (2) comporte un flasque (13) faisant corps avec au moins une partie interne saillante (14) destinée à être reliée définitivement avec au moins une partie conjuguée de la pièce travaillante par des moyens de solidarisation,
caractérisée :
- en ce que le manchon d'enroulement (4) et le moyeu d'entraînement (6) de la pièce travaillante (1) sont en matière plastique non chargée, sont en eux-mêmes rigides et indéformables et s'étendant en porte-à-faux, en étant séparés l'un de l'autre par un espace libre (7) et en étant exempt de tout soutien intérieur et extérieur respectivement du flasque transparent,
- en ce qu'une partie annulaire (9), compressible sur elle-même, comprenant un manchon intermédiaire (10) relié, d'une part, au manchon d'enroulement (14) par une couronne (11) prolongeant le flasque (3) et d'autre part, au moyeu d'entraînement (6) par une couronne (12) aboutissant sensiblement dans la zone médiane du moyeu constitue un élément relativement souple exempt de nervurage qui évite la transmission au moyeu (6) de la faible contraction du manchon (4) dûe à la tension d'enroulement de la bande et qui cependant assure une tenue de la pièce travaillante (1) suffisante pour que l'axe dudit manchon (4) soit toujours sensiblement parallèle à l'axe du moyeu (6),
- en ce qu'une partie annulaire (13, 15) de la pièce transparente (2) prolongeant son flasque (13) vers le centre du moyeu (6) présente un manchon tubulaire (15) s'étendant à l'extérieur du moyeu (6) et constitue un élément relativement souple coopérant avec celui de la pièce travaillante pour corriger de façon subsidiaire la déformation principale dudit élément relativement souple de ladite pièce travaillante,
- en ce que les éléments relativement souples (9 et 13, 15) de la pièce travaillante (1) et de la pièce transparente (2) aboutissent sensiblement dans la zone médiane du moyeu (6),
- et en ce qu'au moins deux cordons de soudure (16, 17 20, 17) relient des parties annulaires conjuguées de contact desdites pièces (1, 2).

2. Bobine selon la revendication 1, caractérisée en ce que chaque moyen de solidarisation est un cordon de soudure ultrasonique ayant une interface de cisaillement délimitée par deux portées dont une au moins est conique relativement à l'axe de la bobine pour assurer un précentrage permanent des pièces en regard de la sonotrode correspondante, précentrage qui autorise un jeu radial fonctionnel d'assemblage desdites deux pièces supérieur au jeu nécessaire et suffisant pour que la pièce excitée par ultrasons puisse vibrer librement contre l'autre demeurée inerte, afin que la géométrie de la bobine ne soit pas perturbée par la soudure.

3. Bobine selon la revendication 1 ou 2, caractérisée en ce qu'une gorge (25) est ménagée dans le flasque (3) de la pièce travaillante (1) autour du manchon d'enroulement (4) pour que le moulage de ce flasque et celui de ce manchon ainsi que de la partie annulaire (9), bien qu'exécutés concomitamment dans le même moule, ne se perturbent pas mutuellement.

4. Bobine selon la revendication 1 ou 2, caractérisée en ce que le flasque (3) de la pièce travaillante (1) fait corps avec le manchon d'enroulement (4) et avec un manchon intérieur de doublage (5) reliés entre eux par des nervures (8).

5. Bobine selon la revendication 1 ou 2, caractérisée en ce que le flasque (3) de la pièce travaillante (1) fait corps avec le manchon d'enroulement (4) et avec des nervures (8) faisant saillie à l'intérieur de celui-ci, l'extrémité libre de ce manchon étant faiblement écartée de la pièce transparente.

6. Bobine selon la revendication 4, caractérisée en ce que des cordons (16, 17) de soudure ultrasonique procédant par cisaillement assurent la liaison rigide, d'une part, de l'extrémité libre du manchon intérieur (5) avec un bourrelet annulaire intérieur (14) du flasque transparent (13) et, d'autre part, de l'extrémité libre d'un manchon tubulaire (15) de la pièce transparente (2) sensiblement perpendiculaire au flasque de celle-ci avec le moyeu d'entraînement (6) près de la partie annulaire (12) de la pièce travaillante.

7. Bobine selon l'une quelconque des revendications 4 ou 5, caractérisée en ce que des cordons (20, 17) de soudure ultrasonique procédant par cisaillement assurent la liaision rigide d'une part, de l'extrémité libre du manchon d'enroulement (4) avec un bourrelet annulaire intérieur (14) du flasque transparent (13) et, d'autre part de l'extrémité libre d'un manchon tubulaire (15) de la pièce transparente (2) sensiblement perpendiculaire au flasque (13) de celle-ci, avec le moyeu d'entraînement (6) près de la partie annulaire (12) de la pièce travaillante (1).

## Patentansprüche

1. Spule für ein Computermagnetband oder andere biegsame Träger, die nur aus zwei Teilen gespritzten Kunststoffs besteht, wobei das eine lichtundurchlässige (1) arbeitend ist und das andere transparente (2) praktisch inert ist, wobei das arbeitende Teil (1) einen Flansch (3) aufweist, der mit einem Aufwickelstutzen (4) und einer Antriebsnabe (6) einstückig ausgebildet ist, während das transparente Teil (2) einen Flansch (13) aufweist, der mit mindestens einem inneren, vorspringenden Abschnitt (14) einstückig ausgebildet ist, der mit mindestens einem zugeordneten Abschnitt des arbeitenden Teils durch Verbindungsmittel endgültig verbunden werden soll,
dadurch gekennzeichnet,
daß der Aufwickelstutzen (4) und die Antriebsnabe (6) des arbeitenden Teils (1) aus Kunststoff ohne Füllstoffe, an sich starr und nicht verformbar sind und sich als Vorsprung erstrecken, wobei sie voneinander durch einen Freiraum (7) getrennt und frei von jeglicher inneren bzw. äußeren Stütze des transparenten Flanschs sind,
daß ein ringförmiger Abschnitt (9), der an sich zusammendrückbar ist und einen Zwischenstutzen (10) aufweist, der einerseits mit dem Aufwickelstutzen (4) durch einen Kranz (11), der den Flansch (3) verlängert, und andererseits mit der Antriebsnabe (6) durch einen Kranz (12), der im wesentlichen im Mittelbereich der Nabe (6) endet, verbunden ist, ein relativ weiches Element ohne Sicken bildet, das die Übertragung der schwachen Kontraktion des Stutzens (4) aufgrund der Aufwickelspannung des Bandes auf die Nabe (6) verhindert und dennoch einen Halt des arbeitenden Teils (1) sichert, der ausreicht, daß die Achse des Stutzens (4) immer im wesentlichen parallel zur Achse der Nabe (6) verläuft,
daß ein ringförmiger Abschnitt (13, 15) des transparenten Teils (2), der seinen Flansch (13) in Richtung der Mitte der Nabe (6) verlängert, einen rohrförmigen Stutzen (15), der außerhalb der Nabe (6) verläuft, aufweist und ein relativ weiches Element bildet, das mit dem des arbeitenden Teils zusammenarbeitet, um die wesentliche Verformung des relativ weiches Elements des arbeitenden Teils unterstützend zu korrigieren,
daß die relativ weiches Elemente (9 und 13, 15) des arbeitenden Teils (1) und des transparenten Teils (2) im wesentlichen im Mittelbereich der Nabe (6) enden, daß mindestens zwei Schweißnähte (16, 17; 20, 17) zugeordnete ringförmige Kontaktabschnitte dieser Teile (1, 2) verbinden.

2. Spule nach Anspruch 1, dadurch gekennzeichnet, daß jedes Verbindungsmittel eine Ultraschallschweißnaht ist mit einer Schubkraftgrenzfläche, die von zwei Bereichen begrenzt wird, von denen mindestens einer konisch relativ zur Achse der Spule verläuft, um eine ständige Vorzentrierung der Teile bezüglich der entsprechenden Sonotrode zu gewährleisten, wobei die Vorzentrierung ein radiales für die Montage der beiden Teile funktionelles Spiel ermöglicht, das größer ist als das gerade ausreichende Spiel, damit das vom Ultraschall angeregte Teil frei gegen das andere inert bleibende Teil vibrieren kann, so daß die Geometrie der Spule durch das Schweißen nicht beeinträchtigt wird.

3. Spule nach Anspruch 1 oder 2, dadurch gekennzeichnet, daß eine Kehle (25) im Flansch (3) des arbeitenden Teils (1) um den Aufwickelstutzen (4) herum angeordnet ist, damit das Formen dieses Flanschs und dieses Stutzens (4) sowie des ringförmigen Abschnitts (9), obwohl sie gleichzeitig in derselben Form gefertigt werden, sich nicht gegenseitig stört.

4. Spule nach Anspruch 1 oder 2, dadurch gekennzeichnet, daß der Flansch (3) des arbeitenden Teils (1) einstückig mit dem Aufwickelstutzen (4) und mit einem inneren Zweitstutzen (5) ausgebildet ist, die miteinander durch Rippen (8) verbunden sind.

5. Spule nach Anspruch 1 oder 2, dadurch gekennzeichnet, daß der Flansch (3) des arbeitenden Teils (1) einstückig mit dem Aufwickelstutzen (4) und mit Rippen (8) ausgebildet ist, die in dessen Inneres hineinragen, wobei das freie Ende dieses Stutzens geringfügig vom transparenten Teil beabstandet ist.

6. Spule nach Anspruch 4, dadurch gekennzeichnet, daß Ultraschallschweißnähte (16, 17), die durch Schubkraft entstehen, die feste Verbindung einerseits des freien Endes des inneren Stutzens (5) mit einem inneren Ringflansch (14) des transparenten Flanschs (13) und andererseits des freien Endes eines rohrförmigen Stutzens (15) des transparenten Teils (2), der im wesentlichen rechtwinklig zum Flansch des Teils (2) ist, mit der Antriebsnabe (6) in der Nähe des ringförmigen Abschnitts (12) des arbeitenden Teils gewährleisten.

7. Spule nach Anspruch 4 oder 5, dadurch gekennzeichnet, daß Ultraschallschweißnähte (20, 17), die durch Schubkraft entstehen, die feste Verbindung einerseits des freien Endes des Aufwickelstutzens (4) mit einem inneren Ringflansch (14) des transparenten Flanschs (13) und andererseits des freien Endes eines rohrförmigen Stutzens (15) des transparenten Teils (2), der im wesentlichen rechtwinklig zum Flansch (13) des Teils (2) ist, mit der Antriebsnabe (6) in der Nähe des ringförmigen Abschnitts (12) des arbeitenden Teils (1) gewährleisten.

## Claims

1. Reel for computer magnetic tape or other flexible carriers, formed by only two components of moulded plastic, one of which (1) is opaque and is a working component and the other of which (2) is transparent and is virtually inert, the working component (1) including a flange (3) integral with a winding sleeve (4) and with a drive hub (6), while the transparent component (2) includes a flange (13) integral with at least one inner projecting part (14) intended to be connected permanently to at least one mating part of the working component by interlocking means, characterised in that the winding sleeve (4) and the drive hub (6) of the working component (1) are made of unfilled plastic, are rigid and dimensionally stable in themselves and extend in an overhanging manner, being separated from one another by a free space (7) and being free of any interior or exterior support respectively from the transparent flange, in that an annular part (9) compressible on itself, comprising an intermediate sleeve (10) connected, on the one hand, to the winding sleeve (4) by a crown (11) extending the flange (13) and, on the other hand, to the drive hub (6) by a crown (12) ending substantially in the central zone of the hub, forms a relatively flexible element free of ribbing which prevents the slight contraction of the sleeve (4) as a result of the winding tension of the tape from being transmitted to the hub (6), but which nevertheless ensures that the working component (1) is held sufficiently for the axis of the said sleeve (4) to be always substantially parallel to the axis of the hub (6), in that an annular part (13, 15) of the transparent component (2) extending its flange (13) towards the centre of the hub (6) has a tubular sleeve (15) extending to the exterior of the hub (6) and forms a relatively flexible element cooperating with that of the working component in order to correct the main deformation of the said relatively flexible element of the said working component in a subsidiary manner, in that the relatively flexible elements (9 and 13, 15) of the working component (1) and the transparent component (2) end substantially in the central zone of the hub (6) and in that at least two weld beads (16, 17; 20, 17) connect mating annular contact parts of the said components (1, 2).

2. Reel according to claim 1, characterised in that each interlocking means is an ultrasonic weld bead having a shearing interface delimited by two bearing surfaces, at least one of which is conical relative to the axis of the reel in order to ensure permanent precentring of the components opposite the corresponding sonotrode, this precentring allowing for a functional radial clearance for the assembly of the two said components greater than the clearance necessary and sufficient for the ultrasonically excited component to be able to vibrate freely against the other component remaining inert, so that the geometry of the reel is not disturbed by the welding.

3. Reel according to claim 1 or claim 2, characterised in that a groove (25) is formed in the flange (3) of the working component (1) around the winding sleeve (4) so that although this flange, this sleeve and the annular part (9) are moulded simultaneously in the same mould, the moulding operations do not disturb one another.

4. Reel according to claim 1 or claim 2, characterised in that the flange (3) of the working component (1) is integral with the winding sleeve (4) and with an inner lining sleeve (5) connected together by ribs (8).

5. Reel according to claim 1 or claim 2, characterised in that the flange (3) of the working component (1) is integral with the winding sleeve (4) and with ribs (8) projecting into the interior of the latter, the free end of this sleeve being at a slight distance from the transparent component.

6. Reel according to claim 4, characterised in that ultrasonic weld beads (16, 17) effected by shearing ensure a rigid connection, on the one hand, between the free end of the inner sleeve (5) and an inner annular collar (14) of the transparent flange (13) and, on the other hand, between the free end of a tubular sleeve (15) of the transparent component (2) substantially perpendicular to the flange of the latter and the drive hub (6) close to the annular part (12) of the working component.

7. Reel according to either of claims 4 and 5, characterised in that ultrasonic weld beads (20, 17) effected by shearing ensure a rigid connection, on the one hand, between the free end of the winding sleeve (4) and an inner annular collar (14) of the transparent flange (13) and, on the other hand, between the free end of a tubular sleeve (15) of the transparent component (2) substantially perpendicular to the flange (13) of the latter and the drive hub (6) close to the annular part (12) of the working component (1).
